# EUROPEAN PATENT APPLICATION

(11) **EP 1 672 557 A1**
(43) Date of publication of application: **21.06.2006**
(21) Application number: 05257675.8
(22) Date of filing: 14.12.2005
(51) Int. Cl.: G06F 21/00, G07C 9/00

(54) **Two factor token identification**

(30) Priority: 16.12.2004 US 13668
(71) Applicant: Saflink Corporation, Bellevue, WA 98005 (US)
(72) Inventor: Mercredi, Dwayne, Bothell, WA 98011 (CA)
(74) Representative: Findlay, Alice Rosemary

(57) **Abstract**

An apparatus, method and program product allow two factor token authentication in the presence of multiple tokens. When multiple tokens are detected, a user desiring access needs merely to provide a unique biometric identifier, referred to as a capture BIR, and that capture BIR is evaluated against a stored BIR associated with at least one of the tokens to determine if access is to be granted. If there is a match, that user is given access. If not, the capture BIR is evaluated against the stored BIR associated with another of the detected tokens. The process may repeat until either a match is found and the user is granted access, or none is found and access is denied. The foregoing occurs without the user having to input any user ID or the like and without the inconvenience or risk of error associated with selecting a user ID from a list of potential user ID's.

## Description

The present invention relates generally to electronically controlled access technologies, and more particularly, to the use of token authentication to control access to protected information and areas.

Electronically controlled access systems require a balance between the often competing needs for security and ease of access. To this end, token recognition systems have developed to promote quicker access to secured data and other resources. Tokens comprise objects, such as badges, that can be sensed or read by a detector that comprises part of an access control device. As a token wearer or holder approaches the detector, the token is interrogated to determine if the wearer should be given access. More particularly, a signal received from the token is checked against a list of approved tokens. Where only a token is required for authentication, access may be granted without the user having to provide a user ID or be otherwise delayed access. As such, the user may have only to walk within range of the detector to gain access.

While tokens provide some measure of convenience and security, they may be duplicated, misplaced, or stolen, making an additional level of authentication desirable. That is, security administrators recognize that the integrity of token systems can be dramatically improved by requiring an additional, two factor, form of authentication. For instance, a two factor token implementation may improve security by requiring the user to present a password or biometric submission in addition to the badge.

Unfortunately, conventional two factor token practices compromise certain efficiencies where multiple tokens are present. Many authentication systems cannot simultaneously detect or process multiple tokens. Systems that can conventionally require users to provide a third form of identification, such as a user ID, in addition to the token and the password/biometric record. That is, when multiple tokens are detected, a user must conventionally type in or otherwise select their user ID. The three factor token identification is required because known systems are not programmed to automatically handle multiple tokens at a time. The systems consequently have no way of knowing which user is actually trying to gain access, and are consequently relegated to prompting users for their respective ID's in order to retrieve applicable user authentication policies and data. The ID's can then be matched to stored passwords or biometric records, but at the cost of the convenience offered by single factor token identification. That is, users are delayed access to the secure information or area which they desire.

While the user ID requirement is generally viewed as a practical necessity, it is nonetheless often a source of frustration and delay, seemingly undermining the efficiency of token authentication. Such frustrations may ultimately translate into a reluctance on behalf of system administrators and users to protect data with two factor token challenges, opting instead for single factor or other less secure forms of authentication.

The present invention provides an improved apparatus, program product and method for enabling two factor token authentication in the presence of multiple tokens. When multiple tokens are detected, a user desiring access needs merely to provide a unique biometric identifier, referred to as a capture BIR, and that capture BIR is evaluated against a stored BIR associated with at least one of the tokens to determine if access is to be granted. If there is a match, that user is given access. If not, the capture BIR is evaluated against the stored BIR associated with another of the detected tokens. The process may repeat until either a match is found and the user is granted access, or none is found and access is denied. The foregoing occurs without the user having to input any user ID or the like and without the inconvenience or risk of error associated with selecting a user ID from a list of potential user ID's.

For efficiency reasons, an internal list associated with the tokens may be created by the access control device. The internal list may be used by the access control device to efficiently sequence through stored BIR's while attempting to find matching biometric records. While the internal list may be ordered arbitrarily, it is typically ordered by token proximity. That is, the closest token to the detector will be first on the internal list, followed by the second closest token, and so on. Ordering by proximity acknowledges that a closer user is statistically most likely to be attempting to access the computer. Ordering the list of tokens thus creates processing and memory efficiencies by allowing a computer to sequence through each user/token, rather than having to recall all stored BIR's.

Still other ordering criteria may include ordering the token identifiers according to the most recent recorded use of the tokens. For example, a token associated with the last user to successfully login may be positioned at the top of the list. This arrangement may accommodate a scenario where one or two users primarily access a computer with the greatest frequency. Similarly, the list may be ordered according to frequency of user access over a given a period, e.g., a week or month.

Should a user wearing or holding a token walk away from the detector after the token's initial detection, that token may be removed from the list. This feature reduces the number of tokens the access control device must initially consider.

The access control device may associate one or more of the detected tokens with respective users. For instance, the first token identifier in the list may be logically associated with a user and security policy. A security policy may include a system, computer or user specific rule mandating one or more biometric and/or other authentication submissions.

By virtue of the foregoing at least through the preferred embodiments there is provided an improved method, apparatus and program product for enabling access with tokens to an access control device in the presence of multiple badges and without requiring a user ID.

The invention will now be further described by way of example with reference to the accompanying drawings in which:

Fig. 1 is a block diagram of an access control device comprising a networked computer system that is consistent with the invention.

Fig. 2 is a block diagram of an exemplary hardware and software environment for another access control device that is consistent with the invention.

Fig. 3 is a flowchart outlining method steps suited for execution within the environments of Figs. 1 and 2 for accomplishing a two factor biometric and token authentication.

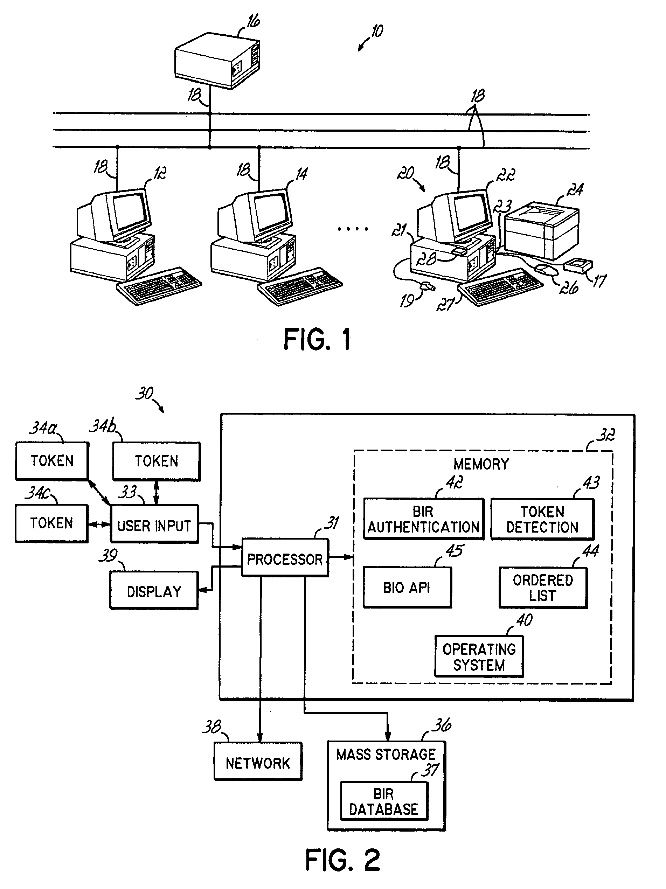

Turning to the Drawings, wherein like numbers denote like parts throughout the several views, the computer system 10 of Fig. 1 comprises an exemplary access control device configured to automatically accomplish a two factor token authentication in the presence of multiple tokens and without requiring a privileged user to provide an ID. Fig. 1 more particularly shows a computer system 10 illustrated as a networked system that includes one or more client computers 12, 14 and 20 (e.g., lap top, desktop or PC-based computers, workstations, etc.) coupled to server 16 (e.g., a PC-based server, a minicomputer, a midrange computer, a mainframe computer, etc.) through a network 18. Network 18 represents a networked interconnection, including, but not limited to local-area, wide-area, wireless, and public networks (e.g., the Internet). Moreover, any number of computers and other devices may be networked through network 18, e.g., multiple servers.

User computer 20, which may be similar to computers 12, 14, may include: a hard drive 21 and associated central processing unit (CPU), a number of peripheral components such as a computer display 22, a storage device 23, a printer 24, and various input devices (e.g., a mouse 26, keyboard 27, token detector 28) to include biometric login devices (fingerprint reader 17, iris scanner 19).

With biometric login devices, a measurable physical characteristic of a user is obtained as a signature, rather than a password. Such physical characteristics are usually very unique to the user and thus difficult to duplicate, defeat, or forget. Examples include fingerprints, iris scans and voice signatures. Other examples might include hand, facial and/or cranial measurements and dimensions.

For biometric access, a user who desires to access computer data will typically provide his or her user ID, along the requisite biometric data to one or more biometric access devices associated with the computer. For example, the user may place their appropriate finger in a fingerprint scanner or reader, expose their eye to a iris scan, or speak into a microphone connected to the computer. This capture biometric identification record (BIR) is compared to a previously stored BIR, or perhaps multiple BIR's depending upon the number and type of biometric access devices to be used. The stored BIR is typically maintained in a file associated with the user, such as by associating the enrollment BIR data with that user's ID.

Those skilled in the art will recognize that biometric devices compatible with the present invention are not limited to the exemplary devices shown in Fig. 1, which include a fingerprint scanner 17 and microphone 19. Consequently, suitable input devices may comprise any mechanism configured to receive BIR data. Server computer 16 may be similarly configured, albeit typically with greater processing performance and storage capacity, as is well known in the art.

Fig. 2 illustrates a hardware and software environment for an apparatus 30 suited to execute a two factor biometric and token authentication. For the purposes of the invention, apparatus 30 may represent a computer, computer system or other programmable electronic device, including: a client computer (e.g., similar to computers 12, 14 and 20 of Fig. 1), a server computer (e.g., similar to server 16 of Fig. 1), a portable computer, an embedded controller, etc. Apparatus 30 will hereinafter also be referred to as a "computer," although it should be appreciated the terms "apparatus" and "access control device" may also include other suitable programmable electronic devices, such as a vault access controller or a controller operating a vehicle ignition switch, among many others.

Computer 30 typically includes at least one processor 31 coupled to a memory 32. Processor 31 may represent one or more processors (e.g., microprocessors), and memory 32 may represent the random access memory (RAM) devices comprising the main storage of computer 30, as well as any supplemental levels of memory, e.g., cache memories, non-volatile or backup memories (e.g., programmable or flash memories), read-only memories, etc. In addition, memory 32 may be considered to include memory storage physically located elsewhere in computer 30, e.g., any cache memory in a processor 31, as well as any storage capacity used as a virtual memory, e.g., as stored within a biometric database 37, or on another computer coupled to computer 30 via network 38.

Computer 30 also may receive a number of inputs and outputs for communicating information externally. For interface with a user, computer 30 typically includes one or more input devices 33 (e.g., a keyboard, a mouse, a trackball, a joystick, a touch pad, iris/fingerprint scanner, and/or a microphone, among others). Input devices 33 include a token detector, such as a card slot reader, radio frequency receiver, transmitter or transponder for communicating with one or more tokens 34a, 34b, 34c. The tokens 34a, 34b, 34c may include their own controllers, receivers, and/or transmitters. Suitable tokens may comprise passive or actively transmitting tokens. Still another input device 33 may include a sonar device.

The computer 30 additionally includes a display 39 (e.g., a CRT monitor, an LCD display panel, and/or a speaker, among others). It should be appreciated, however, that with some implementations of computer 30, e.g., some server implementations, direct user input and output may not be supported by the computer, and interface with the computer may be implemented through a client computer or workstation networked with computer 30.

For additional storage, computer 30 may also include one or more mass storage devices 36 configured to store the biometric database 37. Exemplary devices 36 can include: a floppy or other removable disk drive, a hard disk drive, a direct access storage device (DASD), an optical drive (e.g., a CD drive, a DVD drive, etc.), and/or a tape drive, among others. Furthermore, computer 30 may include an interface with one or more networks 38 (e.g., a LAN, a WAN, a wireless network, and/or the Internet, among others) to permit the communication of information with other computers coupled to the network 38. It should be appreciated that computer 30 typically includes suitable analog and/or digital interfaces between processor 31 and each of components 32, 33, 34, 36 and 38.

Computer 30 operates under the control of an operating system 40, and executes various computer software applications, components, programs, objects, modules, e.g., BIR authentication program 42, token detection program 43, a token list 44, BioAPI 45, among others. BioAPI 45 regards a programming interface supplied by biometric service providers that provides enrollment and verification services for installed biometric devices (e.g., iris or fingerprint scanner, and/or a microphone, among others). Moreover, various applications, components, programs, objects, modules, etc. may also execute on one or more processors in another computer coupled to computer 30 via a network 38, e.g., in a distributed or client-server computing environment, whereby the processing required to implement the functions of a computer program may be allocated to multiple computers over a network.

In general, the routines executed to implement the embodiments of the invention, whether implemented as part of an operating system or a specific application, component, program, object, module or sequence of instructions will be referred to herein as "programs," or simply "program code." The programs typically comprise one or more instructions that are resident at various times in various control device memory and storage devices. When a program is read and executed by a processor, the program causes the access control device to execute steps or elements embodying the various aspects of the invention.

Moreover, while both above and hereinafter described in the context of fully functioning access control devices, such as computer systems, those skilled in the art will appreciate that the various embodiments of the invention are capable of being distributed as a program product in a variety of forms and are unaffected by the particular type of computer readable signal bearing media used to actually carry out the distribution. Examples of computer readable signal bearing media include but are not limited to recordable type media such as volatile and non-volatile memory devices, floppy and other removable disks, hard disk drives, optical disks (e.g., CD-ROMs, DVDs, etc.), among others, and transmission type media such as digital and analog communication links.

In addition, various programs described hereinafter may be identified based upon the application for which they are implemented in a specific embodiment. However, it should be appreciated that any particular program nomenclature that follows is used merely for convenience, and thus there is no limitation to use solely in any specific application identified and/or implied by such nomenclature.

Those skilled in the art will recognize that the exemplary environments illustrated in Figs. 1 and 2 are not intended to be limiting. Indeed, those skilled in the art will recognize that other alternative hardware and/or software environments may be used.

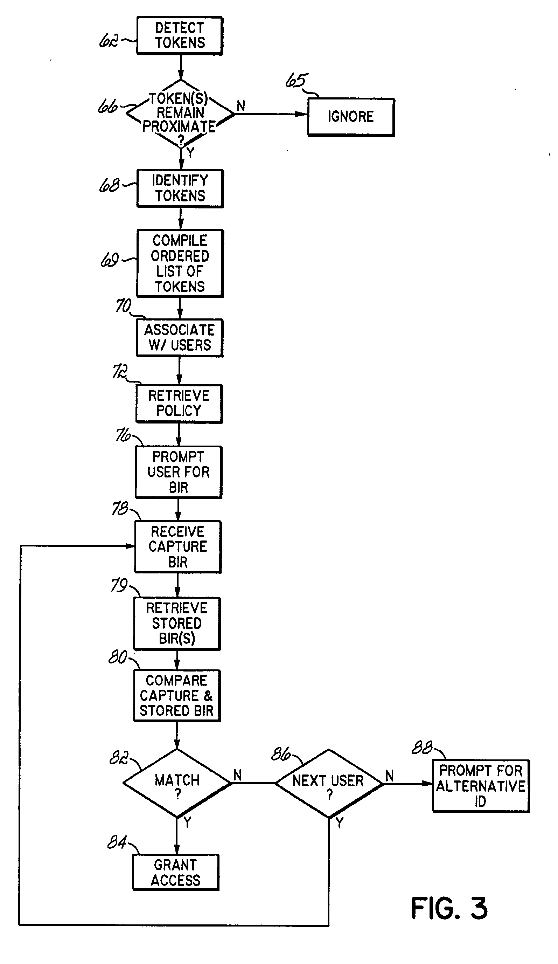

The flowchart 60 of Fig. 3 shows steps executable by the systems of Figs. 1 and 2 for the purpose of enabling two factor biometric and token authentication in the presence of multiple tokens and without requiring a user to provide an ID. More particularly, the detector 18 of the access control device 30 detects the presence of multiple tokens 34a, 34b, 34c at block 62 of Fig. 3. Detection of the tokens 34a, 34b, 34c at block 62 may be accomplished using passive or actively transmitting tokens. For instance, a token 34a may actively transmit an interrogation signal to a token receiver 33 of the access control device 30. The token 34a may be configured to continuously transmit the interrogation signal for a range of five feet, for instance. Alternatively, the access control device 30 may send a signal interrogating the token 34a. Such a scenario may include sonar technologies used to ascertain the presence and/or distance of a token relative to the access control device 30.

To avoid instances where a user unintentionally initiates an authentication sequence by, for instance, walking by the detector 18, the access control device 30 may determine if a token 34a worn by a user remains within a predetermined proximity for a predetermined period. For example, if any token 34b is removed from the detectable proximity of the access control device within a three second period subsequent to the initial detection of the token 34b, the token 34b may be temporarily ignored at block 65 of Fig. 3 for purposes of subsequent authentication. Program protocol may thus require tokens 34a, 34b, 34c to remain continuously within receiver 33 range, or within some other predetermined distance relative to the detector 18. This feature provides an increased probability that the remaining tokens 34a, 34c belong to users actually seeking identification the access control device 30.

The access control device 30 at block 66 of Fig. 3 identifies the tokens 34a, 34b, 34c. Badges or other tokens typically convey within their interrogation signal an ID associated with the token 34a. The access control device 30 is also aware of the relative distance of the token 34a. An embodiment of the invention thus capitalizes on these features of existing token technologies to compile a list 44 of tokens 34a, 34b, 34c at block 69.

While the list 44 created at block 69 may be ordered arbitrarily, it is typically ordered by token proximity. That is, the closest token 34a to the detector 18 will be first on the list, followed by the second closest token 34b, and so on. Ordering by proximity acknowledges that a closest user is statistically most likely to be attempting to gain access via the access control device 30. Ordering the list of tokens 34a, 34b, 34c at block 68 creates processing and memory efficiencies by allowing a access control device 30 to sequence through each user, rather than having to recall all stored BIR's.

One skilled in the art will appreciate that the token list 44 generated at block 69 may alternatively be ordered according to other schemes per application specifications. For instance, a comparable list may ordered according to most recent and/or frequency of use. For example, the first token on a list 44 may coincide with the token 34a of a user who has most recently accessed the access control device 30. Another list 44 may accommodate users most statistically likely over a given period to access the access control device 30 by listing first those tokens associated with users having the highest number of logins in the prior month, for instance.

The above ordering schemes are merely exemplary, and are not intended to be representative of all possible ordering protocols. Indeed, one skilled in the art will appreciate that suitable lists may be ordered according to multiple ordering rules and factors, including combinations of prioritized ordering rules. For instance, tokens may be ordered first according to proximity, and if two tokens are proximately equal, then the most senior or recent user of the two may have their token put at the top of the list 44.

The list 44 of tokens may be mapped to or otherwise associated with corresponding users at block 70 of Fig. 3. A user for purposes of block 70 may include a group designation and/or a user ID associated with an accessing user. For efficiency considerations, the access control device 30 may initially only associate the first token 34a on the list 44 with a corresponding user. Since the first user on the list 44 may be most the most likely to be accessing the access control device, it may conserve processing resources to first attempt to authenticate the user at the top of the list 44.

If that user is associated with one or more authentication policies, only those policies are retrieved at block 72. A policy for purposes of block 72 may include a hardware or software based rule specifying authentication requirements for the user. For instance, the computer at which the user is attempting to login may require a fingerprint submission. Another policy specifically associated with the user or with a group to which the user belongs may call for a iris evaluation. Still another policy retrieved at block 72 may include a system wide policy.

The access control device 30 prompts the user for a capture BIR at block 76 according to one or more of the policies retrieved at block 72. That is, the access control device 30 launches the designated and/or preferred biometric test according to the preset parameters of the biometric verification sequence. For instance, the computer may display to the user, "Please place your finger on the scanner." The capture BIR is consequently received by the access control device 30 at block 78.

A stored BIR associated with the user is retrieved at block 79. As with all other steps in Fig. 3, the step of block 79 may be alternatively accomplished at any time relative to the other blocks of the flowchart 60. Moreover, an embodiment may call for all BIR's associated with a list 44 of users to be retrieved at once, instead of sequentially. As shown in Fig. 3, however, a single stored BIR is typically retrieved for processing and memory efficiency considerations.

The capture BIR submitted by the accessing user at block 78 is compared at block 80 to the stored BIR retrieved at block 79. A user may be granted access at block 84 in response to a match at block 82. Alternatively, in response to a failed match at block 82, the access control device at block 86 may determine if another user/token is on the list 44. If so, the access control device 30 may sequence to the next token on the list and repeat the BIR authentication processes starting at block 79 for the next ordered user. That is, the access control device 30 will retrieve and compare a stored BIR associated with the next ordered user.

If no next user is available at block 86, then the access control device 30 may prompt a user for an alternative ID form at block 88. For instance, the user may be required to type in their ID and/or password. Where desired, the access control device 30 displays a list of user ID's for the user to double-click on or otherwise select. Such displayed user ID's may correspond to the tokens 34a, 34b, 34c detected at block 62.

Generally, however, the access control device 30 enables a privileged user in possession of a token 34a to biometrically gain access via the access control device 30 without first providing an ID. Unlike prior art systems, an accessing user merely provides a capture BIR at the access control device 30, irrespective of other tokens in proximity to the access control device 30. For instance, the accessing user's first perceived interaction with a machine may comprise the placement of an index finger onto a scanner in communication with the access control device. Similarly, a microphone coupled to the access control device may recognize the voice pattern of the accessing user without first requiring identification information.

Program code executing on the access control device 30 compares the capture BIR data to sequenced, stored enrollment BIR data and determines if a match is present. If so, the privileged user is given access. Giving access may comprise the access control device giving or initiating user access to a room, computer resource, vehicle or other protected entity.

While the present invention has been illustrated by a description of embodiments thereof, and while the embodiments have been described in considerable detail, additional advantages and modifications will readily appear to those skilled in the art. For example, a program may encrypt biometric data, conventional passwords and other information at any step delineated in the flowcharts of Figs. 3.

One skilled in the art will appreciate that the steps shown in Fig. 3 may be rearranged with respect to other steps, augmented and/or omitted. That is, the sequence of the steps in the included flowchart may be altered, to include omitting certain processes. Similarly, related or known processes can be incorporated to complement those discussed herein.

It should furthermore be understood that the embodiments and associated programs discussed above are compatible with most known biometric authentication processes and may further be optimized to realize even greater efficiencies. For instance, a program that locally stores BIR data in response to a successful login may be complimented by features of the present invention. The general process of locally storing biometric data in response to a successful login is disclosed in International Application No. PCT/US01/30458, entitled Biometric Record Caching.

As a further example, an authorized delegate user may login biometrically into the account of a principal user as the principal. As such, the token 34a of the delegate user may be associated with a profile of the principal, and that profile, in turn, includes or is otherwise associated with the stored BIR of the delegate user. An analogous process of logging a delegate user into an account of a principal user as the principal is disclosed in International Publication No. WO 03/075135 A1 entitled User Login Delegation. As used therein, a "delegate" may comprise a "user" for purposes of this specification. Actions taken by the delegate user while acting on behalf of a principle user may be recorded for evaluation and accountability considerations. Delegates privileged to privileged to act on behalf of the user are added and deleted to the database as necessary.

## Claims

1. A method of controlling user access with tokens, the method comprising:
detecting a plurality of tokens associated with a plurality of users, including a token associated with the user desiring access;
causing the user to provide a capture biometric record without having to designate a user ID; and
evaluating the capture biometric record with a stored biometric record to determine whether the user is to be given access.

2. The method of claim 1, further comprising creating a list associated with the plurality of tokens.

3. The method of claim 2, wherein evaluating the capture biometric record with a stored biometric record further comprises comparing the capture biometric record with at least one of a plurality of stored biometric records associated with the list.

4. The method of either claim 2 or claim 3, further comprising determining a proximity of the token relative to a detector.

5. The method of claim 4, further comprising ordering the list according to the proximity.

6. The method of claim 5, wherein the closest user is first on the list.

7. The method of claim 2, further comprising ordering the list according to a frequency at which an access control device was accessed by the user associated with the token.

8. The method of claim 7, further comprising ordering the list according to recent activity involving the token.

9. The method of any preceding claim, further comprising determining from the token an identifier associated with the user.

10. The method of claim 9, further comprising determining a policy associated with at least one of the token and the user.

11. The method of claim 10, further comprising associating the policy with a biometric authentication practice.

12. The method of either claim 10 or claim 11, further comprising determining the policy from a group consisting of at least one of a user policy, a program policy and a system wide policy.

13. The method of claim 10, wherein causing the user to provide the biometric record further comprises causing the user to provide the capture biometric record according to the policy.

14. The method of any preceding claim, further comprising prior to causing the user to provide the capture biometric record, determining at a time subsequent to the first detection of the token if the token is within a predetermined proximity.

15. The method of the claim 14, further comprising if the token is not within the predetermined proximity, causing a second user to provide a second biometric record.

16. The method of claim 14, further comprising determining if the token is continuously within the predetermined proximity for a period spanning a time when the token was detected to the time subsequent to the first detection of the token.

17. The method of any preceding claim, further comprising retrieving the stored biometric record from memory of an access control device.

18. The method of any preceding claim, further comprising displaying a plurality of user ID's respectively associated with the plurality of tokens and allowing the user to select the user ID associated with the user.

19. The method of any preceding claim, further comprising in response the evaluation of the capture biometric record and the stored biometric record determining that the user is not to be given access, evaluating the capture biometric record with a second stored biometric record associated with a second user associated with a second token of the plurality of tokens.

20. The method of claim 19, wherein the second token of the second user is next on an ordered list generated in response to detecting the plurality of tokens.

21. The method of any preceding claim, further comprising granting the user access in response to determining a match between the capture biometric record and the stored biometric record.

22. An access control device, comprising:
a detector configured to detect a plurality of tokens associated a plurality of users, including a token associated with a privileged user;
a memory storing a plurality of stored biometric records respectively correlated to the plurality of users; and
a program resident in the memory, the program configured to cause the privileged user to provide a capture biometric record and not a user ID, wherein the program is configured to evaluate the capture biometric record with one of the plurality of stored biometric records to determine whether the privileged user is to be given access by the access control device.

23. The apparatus of claim 22, wherein the memory further includes a list associated with the plurality of tokens.

24. The apparatus of claim 23, wherein the program is configured to compare the capture biometric record with at least one of a plurality of stored biometric records associated with the list.

25. The apparatus of either claim 23 or claim 24, wherein the list is ordered according to a proximity of each token relative to the access control device.

26. The apparatus of claim 25, wherein the closest user relative to the detector is first on the list.

27. The apparatus of claim 23, wherein the list is ordered according to a frequency at which the access control device was accessed by the privileged user.

28. The apparatus of any one of claims 22 to 27, wherein the program is further configured to determine at least one of a policy and a user ID associated with token.

29. The apparatus of claim 28, wherein the policy is associated with a biometric accessing technique.

30. The apparatus of either claim 28 or claim 29, wherein the policy is determined from a group consisting of at least one of a user policy, a program policy and a system wide policy.

31. The apparatus of claim 28, wherein the program causes the user to provide the capture biometric record according to the policy.

32. The apparatus of any one of claims 22 to 31, wherein prior to causing the user to provide the capture biometric record, the program determines at a time subsequent to the first detection of the token if the token is within a predetermined proximity.

33. The apparatus of the claim 32, wherein if the token is not within the predetermined proximity, the program causes a second user to provide a second biometric record.

34. The apparatus of claim 32, wherein token is continuously within the predetermined proximity for a period spanning a time when the token was detected to the time subsequent to the first detection of the token.

35. The apparatus of any one of claims 22 to 34, wherein the stored biometric record is retrieved from memory of at least one of the access control device and a remote access control device.

36. The apparatus of any one of claims 22 to 36, wherein in response to the evaluation of the capture biometric record and the stored biometric record determining that the user is not to be given access to the access control device, the program is configured to evaluate the capture biometric record with a second stored biometric record associated with a second user associated with a second token of the plurality of tokens.

37. The apparatus of any one of claims 22 to 36, wherein the privileged user is granted access to the access control device in response to a determination of a match between the capture biometric record and the stored biometric record.

38. An apparatus comprising:
a plurality of tokens respectively associated with a plurality of users, including a token associated with a privileged user;
a memory storing a stored biometric record correlated with the privileged user; and
a processor configured to receive a signal indicative of the presence of the plurality of tokens, including the token associated with the privileged user, the processor further configured to execute a program configured to cause the privileged user to provide a capture biometric record, and in the absence of an ID provided by the privileged user, to evaluate the capture biometric record with a stored biometric record to determine whether the privileged user is to be given access by an access control device.

39. A program product, comprising:
program code configured to receive a signal indicative of the presence of a plurality of tokens associated with a plurality of users, including a token associated with a privileged user, wherein the program is further configured to cause the privileged user to provide a capture biometric record, and in the absence of a user ID provided by the privileged user, to evaluate the capture biometric record with a stored biometric record to determine whether the privileged user is to be given access by an access control device; and
a signal bearing medium bearing the program code.
